# EUROPÄISCHE PATENTSCHRIFT

(11) **EP 2 711 518 B1**
(45) Veröffentlichungstag und Bekanntmachung des Hinweises auf die Patenterteilung: **26.02.2020**
(21) Anmeldenummer: 13184763.4
(22) Anmeldetag: 17.09.2013
(51) Int. Cl.: F01N 3/20, F01N 3/28

(54) **Abgasanlage für ein Kraftfahrzeug**
Exhaust gas assembly for a motor vehicle
Installation de gaz d'échappement pour un véhicule automobile

(30) Priorität: 20.09.2012 DE 102012216923
(43) Veröffentlichungstag der Anmeldung: 26.03.2014
(73) Patentinhaber: Eberspächer Exhaust Technology GmbH & Co. KG, 66539 Neunkirchen (DE)
(72) Erfinder: Calvo Zuevo, Silvia, 73730 Esslingen (DE)
(74) Vertreter: BRP Renaud & Partner mbB Rechtsanwälte Patentanwälte Steuerberater

(56) Entgegenhaltungen:
- EP-A1- 1 748 162
- WO-A1-03/004839
- DE-A1-102007 020 812
- DE-A1-102007 048 558
- US-A1- 2008 302 088
- US-A1- 2011 214 415

## Beschreibung

Die vorliegende Erfindung betrifft eine Abgasanlage für ein Kraftfahrzeug sowie ein Kraftfahrzeug mit einer solchen Abgasanlage.

Die in einer Brennkraftmaschine eines Kraftfahrzeugs betriebsmäßig erzeugten Abgase können mit Hilfe eines Fahrzeugkatalysators gereinigt werden, um die Schadstoffemission des Abgases deutlich zu reduzieren. Eine solche Reinigung des Abgases kann durch Zugabe eines Reduktionsmittels zu dem Abgas der Brennkraftmaschine in einer Abgasbehandlungseinrichtung erfolgen. Ein bekanntes Verfahren, welches auf einer derartigen Zugabe eines Reduktionsmittels in das Abgas basiert, ist die sogenannte selektive katalytische Reduktion ("SCR", "Selective Catalytic Reduction"), bei welcher Stickoxid-Verbindungen im Abgas chemisch reduziert werden.

Eine derartige selektive katalytische Reduktion ist insbesondere in Verbindung mit Brennkraftmaschinen sinnvoll, die bei der Verbrennung von Kraftstoff einen hohen Luftüberschuss erzeugen, wie dies beispielsweise bei Dieselmotoren der Fall ist, in deren Abgas hohe Sauerstoffkonzentrationen vorhanden sind. Aufgrund einer solchen hohen Sauerstoffkonzentration im Abgas ist die Verwendung eines herkömmlichen Drei-Wege-Katalysators zur Reduktion von Stickoxiden nicht möglich. Daher werden in Verbindung mit Dieselmotoren häufig Oxidationskatalysatoren verwendet, welche die Emission von CO und CₘHₙ vermindern. Die katalytisch aktiven Edelmetalle wie beispielsweise Platin oder Palladium können in einen sog. "Washcoat" eingelagert werden.

Die eigentliche selektive katalytische Reduktion erfolgt in einem dem Diesel-Oxidationskatalysator nachgeschalteten Bereich der Abgasbehandlungsvorrichtung. Als Reduktionsmittel kann Ammoniak zum Einsatz kommen, welches der Abgasbehandlungsvorrichtung zur Verfügung gestellt werden muss. Zur Bereitstellung von Ammoniak in der Abgasanlage wird jedoch üblicherweise Ammoniak nicht direkt in die Abgasanlage eingespritzt, sondern in Form eines Reduktionsmittel-Vorläufers in die Abgasanlage eingebracht. Ein solcher Vorläufer kann beispielsweise eine Harnstoff-Wasser-Lösung sein, die im Handel unter dem Namen "Adblue" bekannt ist. Die Umsetzung eines derartigen Vorläufers zu dem eigentlichen Reduktionsmittel (Ammoniak) kann thermisch oder/und unter Zuhilfenahme eines Katalysators innerhalb eines Abgasstroms in dem der Abgasbehandlungseinrichtung nachgeschalteten Bereich der Brennkraftmaschine erfolgen.

Die Zuführung des Reduktionsmittels in die Abgasanlage kann beispielsweise durch Eindüsen mittels eines Injektors erfolgen. Ein solcher Injektor kann stromab des eigentlichen Diesel-Oxidationskatalysators angeordnet sein. Bei bestimmten Einbausituationen können bei einer derartigen Anordnung jedoch eingedüste Tröpfchen der Harnstoff-Wasser-Lösung auf die Oberfläche des Diesel-Oxidationskatalysators treffen und dort unerwünschte Ablagerungen bilden. Gleiches gilt für das aus der Harnstoff-Wasser-Lösung gebildete Ammoniak, da ein Kontakt von Ammoniak mit den katalytisch aktiven Edelmetallen des Diesel-Oxidationskatalysators, beispielsweise in einer "Washcoat", zu einer unerwünschten Reaktion des Ammoniak mit Platin bzw. Palladium zu Stickoxiden führen kann.

Aus der EP 1 748 162 A1 ist ein System zur Abgasbehandlung bekannt, welches einen Injektor zum Eindüsen einer Harnstoff-Wasser-Lösung in eine Abgasleitung sowie einen Oxidationskatalysator umfasst. In der Abgasleitung ist im Abstand ein fester Gegenstand wie beispielsweise eine Platte mit Durchgangsöffnungen vorgesehen. Auf diesen Gegenstand treffen mittels des Injektors eingedüste Tropfen der Harnstoff-Wasser-Lösung auf, bevor sie die Wandung der Abgasleitung erreichen.

Es ist daher eine Aufgabe der vorliegenden Erfindung, eine Ausführungsform bereitzustellen, bei welcher oben genannte Probleme beseitigt oder zumindest reduziert sind.

Die oben genannte Aufgabe wird gelöst durch den Gegenstand der unabhängigen Ansprüche. Bevorzugte Ausführungsformen sind Gegenstand der abhängigen Ansprüche.

Die Erfindung beruht auf dem allgemeinen Gedanken, zwischen der Abgasreinigungseinrichtung der Abgasanlage, beispielsweise einem Diesel-Oxidationskatalysator "DOC", und der Reduktionsmittel-Zuführungseinrichtung, beispielsweise in der Art eines Injektors zum Einbringen einer Harnstoff-Wasser-Lösung in die Abgasanlage, eine Reduktionsmittel-Ablenkeinrichtung vorzusehen, welche wenigstens ein schaufelartig ausgebildetes Reduktionsmittel-Ablenkelement aufweist.

Mittels einer derartigen Reduktionsmittel-Ablenkeinrichtung kann erreicht werden, dass ein unerwünschter Kontakt zwischen dem Vorläufer des Reduktionsmittels, also beispielsweise einer Harnstoff-Wasser-Lösung bzw. des Reduktionsmittels selbst, beispielsweise Ammoniak, und der Abgasreinigungseinrichtung, beispielsweise eines Diesel-Oxidationskatalysators, vermieden wird. Dies gilt insbesondere für die in der Abgasreinigungseinrichtung katalytisch aktiven Edelmetalle.

Reduktionsmittel und Reduktionsmittel-Vorläufer Wasser-Lösung können mittels des wenigstens einen Reduktionsmittel-Ablenkelements von der Abgasreinigungseinrichtung abgelenkt werden, so dass weitgehend oder vollständig verhindert werden kann, dass der Vorläufer bzw. das aus dem Vorläufer gebildete Reduktionsmittel in den Diesel-Oxidationskatalysator eindringen kann.

Auf diese Weise wird die unerwünschte Bildung von Ablagerungen bzw. Nebenprodukten, wie z.B. Stickoxiden, in der Abgasreinigungseinrichtung zum großen Teil oder sogar vollständig vermieden, was wiederum zu einer Verbesserung der Leistungsfähigkeit der Abgasanlage führt.

Die erfindungsgemäße Abgasanlage umfasst eine Abgasreinigungseinrichtung zur Reinigung von aus einer Brennkraftmaschine des Kraftfahrzeugs abgeführtem Abgas sowie eine stromab und beabstandet zur Abgasreinigungseinrichtung angeordnete Reduktionsmittel-Zuführungseinrichtung. Mittels einer solchen Reduktionsmittel-Zuführungseinrichtung kann Reduktionsmittel in die Abgasanlage eingebracht werden. Unter dem Begriff "Reduktionsmittel-Zuführungseinrichtung" ist dabei nicht nur eine Einrichtung zu verstehen, welche ein Reduktionsmittel, z.B. Ammoniak, direkt in die Abgasanlage einbringt; vielmehr ist unter diesem Begriff ausdrücklich auch die indirekte Zuführung des Reduktionsmittels derart zu verstehen, dass mittels der Reduktionsmittel-Zuführungseinrichtung ein Vorläufer des Reduktionsmittels, z.B. eine Harnstoff-Wasser-Lösung, in die Abgasanlage eingebracht wird und dieser Vorläufer in der Abgasanlage mittels thermischer Reaktion o.ä. zu dem eigentlichen Reduktionsmittel reagiert.

Entsprechend einer vorteilhaften Ausführungsform kann die Reduktionsmittel-Zuführungseinrichtung so ausgestaltet und/oder angeordnet sein, dass eine Strömungsrichtung, mit der das Reduktionsmittel in die Abgasanlage eingebracht wird, wenigstens teilweise entgegengesetzt zur Strömungsrichtung des Abgases in der Abgasanlage verläuft. Mit anderen Worten, das Reduktionsmittel wird so eingebracht, dass es zumindest zu Beginn eine Ausbreitungs- bzw. Bewegungsrichtung aufweist, die eine der Abgasströmungsrichtung entgegengesetzte Richtungskomponente aufweist, so dass sich das Reduktionsmittel in Richtung auf die stromauf angeordnete Abgasreinigungseinrichtung bewegt. Hierdurch wird eine zur Verdampfung des Reduktionsmittels sowie zur Vermischung mit dem Abgas zur Verfügung stehende Zeit vergrößert, was die Effizienz der Reduktionsmitteleinbringung auf engem Raum verbessert. Bevorzugt ist die (Haupt-) Strömungsrichtung des Reduktionsmittels um 45°±30°, insbesondere um 45°±15°, gegenüber der (Haupt-) Strömungsrichtung des Abgases geneigt.

In einer bevorzugten Ausführungsform kann das Reduktionsmittel-Ablenkelement derart ausgebildet sein, dass von der Reduktionsmittel-Zuführungseinrichtung in die Abgasanlage eingebrachtes und auf das Reduktionsmittel-Ablenkelement treffendes Reduktionsmittel von der Abgasreinigungseinrichtung weggerichtet abgelenkt wird. Mittels einer derartigen Ablenkung wird erreicht, dass nur ein sehr geringer Anteil des von der Reduktionsmittel-Zuführungseinrichtung in die Abgasanlage eingebrachten Reduktionsmittels in die Abgasreinigungseinrichtung gelangen und dort zu unerwünschten Nebenprodukten bzw. Ablagerungen führen kann. Idealerweise gelangt gar kein Reduktionsmittel in die Abgasreinigungseinrichtung. Mit einem derartigen, weggerichteten Ablenken des Reduktionsmittels mittels der Reduktionsmittel-Ablenkeinrichtung und deren Reduktionsmittel-Ablenkelement(en) wird erreicht, dass die Bauteile der Abgasreinigungseinrichtung, insbesondere deren Oberfläche, z.B. eine Platin-Beschichtung, nicht von dem Reduktionsmittel berührt und kontaminiert werden, so dass eine unerwünschte chemische Reaktionen des Reduktionsmittels mit der Oberfläche der Abgasreinigungseinrichtung vermieden werden kann.

Bei einer anderen Ausführungsform kann zusätzlich oder alternativ vorgesehen sein, dass das Reduktionsmittel-Ablenkelement derart ausgebildet ist, dass von der Reduktionsmittel-Zuführungseinrichtung in die Abgasanlage eingebrachtes und auf das Reduktionsmittel-Ablenkelement treffendes flüssiges Reduktionsmittel verdampft wird. Durch Bereitstellen einer Aufprall- und Verdampferfläche kann die Verdampfung des Reduktionsmittels unterstützt werden. Insbesondere kann das Reduktionsmittel-Ablenkelement die jeweilige Verdampferfläche bezüglich der Abgasströmung abströmseitig aufweisen, so dass diese durch die ankommende Abgasströmung beheizt wird, was die Verdampfung unterstützt. Besonders vorteilhaft ist eine Ausführungsform, bei welcher die Einbringung des flüssigen Reduktionsmittels gezielt so erfolgt, dass es zu einer Beaufschlagung des Reduktionsmittel-Ablenkelements mit Reduktionsmittel kommt, derart, dass ein Wesentlicher Anteil der Verdampfung am Reduktionsmittel-Ablenkelement erfolgt. Hierdurch kann eine Mischstrecke zwischen der Abgasreinigungseinrichtung und einem gegebenenfalls stromab davon angeordneten SCR-Katalysators vergrößert bzw. besser ausgenutzt werden.

In einer besonders bevorzugten Ausführungsform ist die Reduktionsmittel-Ablenkeinrichtung an einer Auslassseite der Abgasreinigungseinrichtung angeordnet oder/und befestigt. Auf diese Weise kann die Reduktionsmittel-Ablenkeinrichtung besonders wirksam eingesetzt werden, wenn Reduktionsmittel oder ein Vorläufer davon mittels der Reduktionsmittel-Zuführungseinrichtung stromab der Abgasreinigungseinrichtung in die Abgasanlage eingebracht wird und entgegen einer Stromrichtung des Abgases in die Abgasanlage eingespritzt wird.

Die Reduktionsmittel-Ablenkeinrichtung kann dabei als separates Bauteil ausgebildet sein, welches stromab der Abgasreinigungseinrichtung im Abgasstrang angebracht ist; in einer technisch besonders einfach herzustellenden Ausführungsform kann die Reduktionsmittel-Ablenkeinrichtung aber auch direkt an der Auslassseite der Abgasreinigungseinrichtung befestigt sein, beispielsweise mittels Verschweißen o. ä..

Um die Abgasreinigungseinrichtung besonders gut vor dem in die Abgasanlage eingespritzten Reduktionsmittel bzw. dessen Vorläufer zu schützen, kann die Reduktionsmittel-Ablenkeinrichtung nicht nur ein einziges Reduktionsmittel-Ablenkelement, sondern eine Mehrzahl solcher Reduktionsmittel-Ablenkelemente umfassen, welche allesamt im Bereich der Auslassseite der Abgasreinigungseinrichtung angeordnet sind.

Einen besonders hohen Wirkungsquerschnitt der Reduktionsmittel-Ablenkeinrichtung kann eine blickdichte Anordnung oder/und eine blickdichte Ausgestaltung der Reduktionsmittel-Ablenkelemente in einer Ausbreitungsrichtung des Reduktionsmittels bzw. Vorläufer zur Auslassseite hin erzielen. Dabei ist unter "Ausbreitungsrichtung" eine Richtung zu verstehen, in welcher das Reduktionsmittel bzw. dessen Vorläufer mittels der Reduktionsmittel-Zuführungseinrichtung in die Abgasanlage eingedüst wird.

In einer weiterbildenden Ausführungsform kann daran gedacht sein, dass die Auslassseite eine Auslass-Querschnittsfläche der Abgasreinigungseinrichtung definiert. In diesem Bereich der Auslass-Querschnittsfläche kann wenigstens ein im Wesentlichen strebenartig ausgebildetes Befestigungselement angeordnet sein, welches sich jeweils endseitig an der Auslassöffnung abstützt. An dem wenigstens einen Befestigungselement wiederum kann wenigstens ein Reduktionsmittel-Ablenkelement angeordnet sein. Das im Wesentlichen strebenartig ausgebildete Befestigungselement kann beispielsweise mittels Verschweißen an der Auslassöffnung befestigt sein. Durch die Verwendung eines im Wesentlichen strebenartig ausgebildeten Befestigungselements kann eine mechanisch besonders stabile Anordnung der Reduktionsmittel-Ablenkelemente im Bereich der Auslassseite erzielt werden und optional auch die vorangehend erläuterte blickdichte Anordnung bzw. Ausgestaltung auf einfache Weise verwirklicht werden.

In einer technisch besonders einfach herzustellenden und somit kostengünstigen Ausführungsform kann das Reduktionsmittel-Ablenkelement integral am Befestigungselement ausgeformt sein.

In einer besonders bevorzugten Ausführungsform, welche für den Praxisbetrieb der Abgasanlage in einem Kraftfahrzeug geeignet ist, können im Bereich der Auslass-Querschnittsfläche wenigstens zwei, vorzugsweise fünf, höchst vorzugsweise zehn, zueinander beabstandet angeordnete Befestigungselemente angeordnet sein. Ein jedes Befestigungselement kann dabei dann in der Art einer Strebe ausgebildet sein. Die Bereitstellung einer Mehrzahl solcher Befestigungselemente ermöglicht die Anordnung einer großen Anzahl von Reduktionsmittel-Ablenkelementen auf diesen Befestigungselementen, was wiederum eine besonders wirksame Ablenkung von in die Abgasanlage eingebrachten Reduktionsmittel bzw. dessen Vorläufer ermöglicht.

Vorzugsweise können die Befestigungselemente zeilenartig in der Auslass-Querschnittsfläche angeordnet sein. Die Reduktionsmittel-Ablenkelemente können dann jeweils beabstandet zueinander auf einem Befestigungselement angebracht sein, so dass durch die Reduktionsmittel-Ablenkelemente ein Reduktionsmittel-Ablenkelemente-Raster ausgebildet ist. Mittels einer derartigen rasterartigen Anordnung der Reduktionsmittel-Ablenkelemente wird eine besonders effektive Ablenkung von Reduktionsmittel bzw. dessen Vorläufer erzielt.

In einer technisch besonders einfach herzustellenden Ausführungsform können die Befestigungselemente jeweils als gerade Streben ausgebildet sein. Diese Streben sind im Wesentlichen parallel und beabstandet zueinander im Bereich der Auslass-Querschnittsfläche der Abgasreinigungseinrichtung angeordnet.

In einer dazu alternativen Variante können die Befestigungselemente jeweils als gekrümmte Streben ausgebildet sein, die ebenfalls beabstandet zueinander im Bereich der Auslass-Querschnittsfläche der Abgasreinigungseinrichtung angeordnet sein können.

Eine verbesserte Ablenkung von Reduktionsmittel bzw. dessen Vorläufer durch die Reduktionsmittel-Ablenkelemente wird durch eine in der Axialrichtung gekrümmte oder abgewinkelte Ausbildung der Reduktionsmittel-Ablenkelemente gemäß einer bevorzugten Ausführungsform erzielt. Gemäß dieser Ausführungsform sind die Reduktionsmittel-Ablenkelemente an einem axialen Endabschnitt eines jeweiligen Befestigungselements befestigt.

Die Erfindung betrifft des Weiteren ein Kraftfahrzeug mit einer Abgasanlage mit einem oder mehreren der vorhergehend genannten Merkmale sowie mit einer stromauf der Abgasanlage angeordneten und mit dieser fluidisch verbundenen Brennkraftmaschine.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine aus dem Stand der Technik bekannte Abgasanlage in einer grobschematischen Ansicht,
- Fig. 2a/2b: eine erfindungsgemäße Abgasanlage in einer grobschematischen Ansicht, wobei die Figur 2a eine Seitenansicht und die Figur 2b eine Rückansicht zeigt,
- Fig.3: eine erste Variante des Ausführungsbeispiel der Figur 2 mit gekrümmt ausgebildeten Ablenkelementen,
- Fig.4: eine zweite Variante des Ausführungsbeispiel der Figur 2 mit abgewinkelt ausgebildeten Ablenkelementen,
- Fig.5: eine dritte Variante des Ausführungsbeispiel der Figur 2 mit gekrümmt ausgebildeten Befestigungselementen,
- Fig.6: eine vierte Variante des Ausführungsbeispiel der Figur 2 mit zweiteilig ausgebildeten Befestigungselementen.

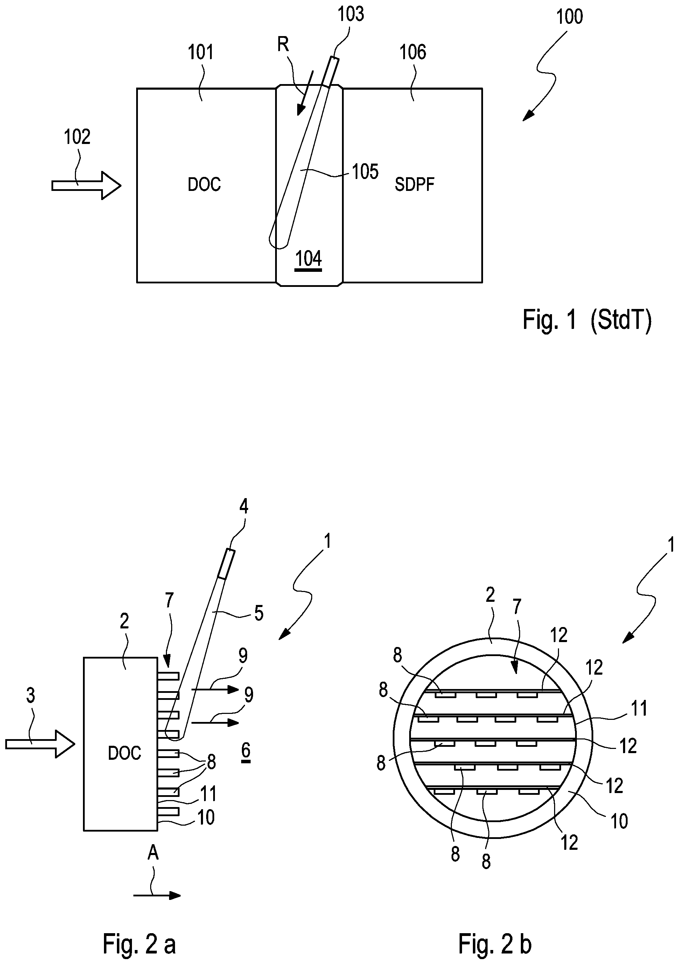

In der Darstellung der Figur 1 ist eine Abgasanlage grobschematisch gezeigt und mit 100 bezeichnet. Die Abgasanlage 100 umfasst eine Abgasreinigungseinrichtung 101, die beispielsweise als Diesel-Oxidationskatalysator zur Reinigung von aus einer Brennkraftmaschine (nicht gezeigt) des Kraftfahrzeugs abgeführtem Abgas (vergleiche Pfeil 102) ausgebildet sein kann. Mittels eines solchen Diesel-Oxidationskatalysators kann beispielsweise die Emission von CO und CₘHₙ im Abgas 102 reduziert werden.

Zum Zwecke der selektiven katalytischen Reduktion kann stromab der Abgasreinigungseinrichtung 101 eine Reduktionsmittel-Zuführungseinrichtung 103 in der Art eines Injektors angeordnet sein. Mittels der Reduktionsmittel-Zuführungseinrichtung 103 kann ein Reduktionsmittel-Vorläufer, beispielsweise eine Harnstoff-Wasser-Lösung, in die Abgasanlage 100 eingebracht werden. Diese Harnstoff-Wasser-Lösung kann im Bereich 104 stromab der Abgasreinigungseinrichtung 101 thermisch und/oder unter Zuhilfenahme eines Katalysators innerhalb des Abgasstromes in ein Reduktionsmittel (wie z.B. Ammoniak) umgewandelt werden. Dem Bereich 104 kann ein Partikelfilter 106 ("SDPF") nachgeschaltet sein. Zur effektiven Vermischung der Harnstoff-Wasser-Lösung im Abgas kann im Bereich 104 ein geeignetes Durchmischungselement, beispielsweise in der Art eines Wabenmischers oder ähnlichem, angeordnet sein (in der Figur 1 der Übersichtlichkeit halber nicht gezeigt). Alternativ dazu kann eine Strömungsrichtung R der Harnstoff-Wasser-Lösung, die mittels des Injektors 103 im Bereich 104 der Abgasanlage eingespritzt wird, wie in der Figur 1 gezeigt, wenigstens teilweise entgegengesetzt zur Strömungsrichtung 102 des Abgases in der Abgasanlage 100 verlaufen, um auf diese Weise eine besonders gute Durchmischung des Abgases mit der Harnstoff-Wasser-Lösung zu erzielen.

Nachteilig daran ist jedoch, dass ein Teil der Harnstoff-Wasser-Lösung, der in der Figur 1 mit dem Bezugszeichen 105 bezeichnet ist, in die Abgasreinigungseinrichtung 101 eindringen kann und in dieser unerwünschte Ablagerungen oder ähnliches ausbilden kann. Des Weiteren kann die Harnstoff-Wasser-Lösung bzw. der aus dieser gebildete Ammoniak (NH₃) mit einer Oberflächenbeschichtung, beispielsweise Palladium oder Platin, der Abgasreinigungseinrichtung 101 zu Stickoxiden (NOₓ) reagieren. Beide Effekte führen zu einer verringerten Reinigungsfähigkeit der Abgasanlage 100.

Auch für den Fall, dass im Bereich 104 der Abgasanlage 100 ein Wabenmischer oder ähnliches zur besonders effektiven Durchmischung der Harnstoff-Wasser-Lösung mit dem Abgas der Abgasanlage 100 erreicht werden kann, besteht die Gefahr, dass von dem Wabenmischer reflektiertes Reduktionsmittel in analoger Weise in den Diesel-Oxidationskatalysator eindringen und dort zu oben erwähnten Ablagerungen bzw. unerwünschten Nebenprodukten (z.B. NOₓ) führen kann.

Demgegenüber ist in der Darstellung der Figur 2 eine erfindungsgemäße Abgasanlage dargestellt. Die Figur 2a zeigt dabei eine grobschematische Seitenansicht, die Figur 2b eine Ansicht gegen die Strömungsrichtung des Abgases in der Abgasanlage 1. In der Figur 2 ist die erfindungsgemäße Abgasanlage mit 1 bezeichnet.

Die Abgasanlage 1 weist eine Abgasreinigungseinrichtung 2 in der Art eines Diesel-Oxidationskatalysators zur Reinigung von aus der Brennkraftmaschine des Kraftfahrzeugs (nicht gezeigt) abgeführtem Abgas 3 auf. Stromab oder beabstandet zur Abgasreinigungseinrichtung 2 ist eine Reduktionsmittel-Zuführungseinrichtung 4 angeordnet, mittels welcher ein Reduktionsmittel, welches in Figur 2a grobschematisch angedeutet und mit dem Bezugszeichen 5 bezeichnet ist, in die Abgasanlage 1 eingebracht werden kann. Mittels der Reduktionsmittel-Zuführungseinrichtung 4 kann vorzugsweise eine Reduktionsmittel-Vorläuferlösung, beispielsweise eine Harnstoff-Wasser-Lösung, in die Abgasanlage 1 eingebracht werden. In einem Bereich 6 stromab der Abgasreinigungseinrichtung 2 kann der Reduktionsmittel-Vorläufer mit dem Abgas 3 aus der Abgasanlage vermischt werden und somit ein Reduktionsmittel, im Falle der Harnstoff-Wasser-Lösung Ammoniak (NH₃), erzeugt werden. Mittels des Reduktionsmittels können in dem Abgas 3 enthaltene Stickoxide (NOₓ) zu Stickstoff (N₂) reduziert werden.

Zur effektiven Durchmischung des Reduktionsmittel-Vorläufers mit dem Abgas kann dieses in einer Strömungsrichtung S in die Anlage 1 eingespritzt werden, die wenigstens teilweise der Strömungsrichtung des Abgases 3 (vgl. Figur 2a) entgegengerichtet ist. Um zu verhindern, dass das aus der Reduktionsmittel-Vorläuferlösung bzw. gebildete Reduktionsmittel auf unerwünschte Weise in die Abgasreinigungseinrichtung 2 eintreten kann, ist erfindungsgemäß zwischen der Abgasreinigungseinrichtung 2 und der Reduktionsmittel-Zuführungseinrichtung 4 eine Reduktionsmittel-Ablenkeinrichtung 7 angeordnet, die wenigstens ein schaufelartig ausgebildetes Reduktionsmittel-Ablenkelement 8 aufweist.

In der Darstellung der Figur 2a sind exemplarisch acht solcher Reduktionsmittel-Ablenkelemente 8 gezeigt; es ist klar, dass in Varianten aber auch eine andere Anzahl an Reduktionsmittel-Ablenkelementen 8 vorgesehen sein kann. Die Reduktionsmittel-Ablenkelemente 8 sind derart ausgebildet, dass das von der Reduktionsmittel-Zuführungseinrichtung 7 in die Abgasanlage 1 eingebrachte und auf die Reduktionsmittel-Ablenkelemente 8 treffende Reduktionsmittel bzw. der Reduktionsmittel-Vorläufer von der Abgasreinigungseinrichtung 2 weggerichtet abgelenkt wird (vergleiche Pfeile 9). Die Reduktionsmittel-Ablenkeinrichtung 7 kann an einer Auslassseite 10 der Abgasreinigungseinrichtung 2 angeordnet oder/und befestigt sein. Die Reduktionsmittel-Ablenkelemente 8 können in einer bevorzugten Variante in der Ausbreitungsrichtung S blickdicht angeordnet oder/und ausgestaltet sein. Auf diese Weise lässt sich besonders gut verhindern, dass Reduktionsmittel in die Abgasreinigungseinrichtung 2 eindringen kann.

Aus der Darstellung der Figur 2a lässt sich auch entnehmen, dass die Auslassseite 10 eine Auslass-Querschnittsfläche 11 der Abgasreinigungseinrichtung 2 definiert. Die Figur 2b zeigt die Abgasreinigungseinrichtung 2 mit Blickrichtung auf die Auslass-Querschnittsfläche 11. Im Bereich der Auslass-Querschnittsfläche 11 sind exemplarisch fünf Befestigungselemente 12 angeordnet, die im Wesentlichen strebenartig ausgebildet sind und sich jeweils endseitig an der Auslassseite 10 der Abgasreinigungseinrichtung 2 abstützen. Es ist klar, dass in Varianten des Ausführungsbeispiels auch eine andere Anzahl an strebenartig ausgebildeten Befestigungselementen 12 möglich ist. Auf jedem der Befestigungselemente 12 können mehrere Reduktionsmittel-Ablenkelemente 8 angeordnet sein. Auch die in der Figur 2b gezeigte jeweilige Anzahl an solchen Ablenkelementen ist nur exemplarisch anzusehen. Die Befestigungselemente 12 können endseitig an der Auslassseite 10 der Abgasreinigungseinrichtung 2 befestigt sein, beispielsweise mittels Verschweißen. Ebenso können die Reduktionsmittel-Ablenkelemente 8 an den jeweiligen Befestigungselementen 12 angeschweißt sein. In einer Variante können die Reduktionsmittel-Ablenkelemente 8 aber auch integral am jeweiligen Befestigungselement 12 ausgeformt sein. Bevorzugt sind im Bereich der Auslass-Querschnittsfläche 11 wenigstens fünf, vorzugsweise wenigstens zehn, höchst vorzugsweise wenigstens zwanzig, zueinander beabstandet angeordnete Befestigungselemente 12 angeordnet.

Aus der Darstellung der Figur 2b kann man entnehmen, dass die Befestigungselemente 12 zeilenartig in der Auslass-Querschnittsfläche 11 angeordnet sein können. Da auf jedem Befestigungselement 12 die Reduktionsmittel-Ablenkelemente 8 jeweils beabstandet zueinander angeordnet sind, wird durch die Reduktionsmittel-Ablenkelemente 8 eine Art Reduktionsmittel-Ablenkelemente-Raster ausgebildet.

Die Befestigungselemente 12 können, wie in der Figur 2b exemplarisch gezeigt, jeweils als im Wesentlichen gerade Streben ausgebildet sein, die im Wesentlichen parallel und beabstandet zueinander im Bereich der Auslass-Querschnittsfläche 11 der Abgasreinigungseinrichtung 2 angeordnet sind.

Die Reduktionsmittel-Ablenkelemente 8 können in einer Axialrichtung A (vgl. Figur 2a) gerade ausgebildet sein.

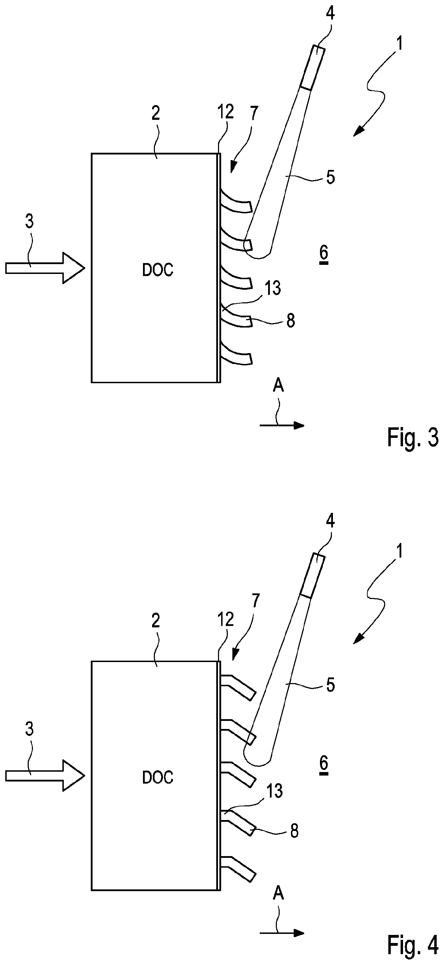

In den in den Figuren 3 und 4 gezeigten Varianten können die Reduktionsmittel-Ablenkelemente 8 entlang der axialen Richtung A aber auch jeweils gekrümmt (vgl. Figur 3) oder abgewinkelt (vgl. Figur 4) ausgebildet sein und mit einem axialen Endabschnitt 13 jeweils an einem Befestigungselement 12 befestigt sein.

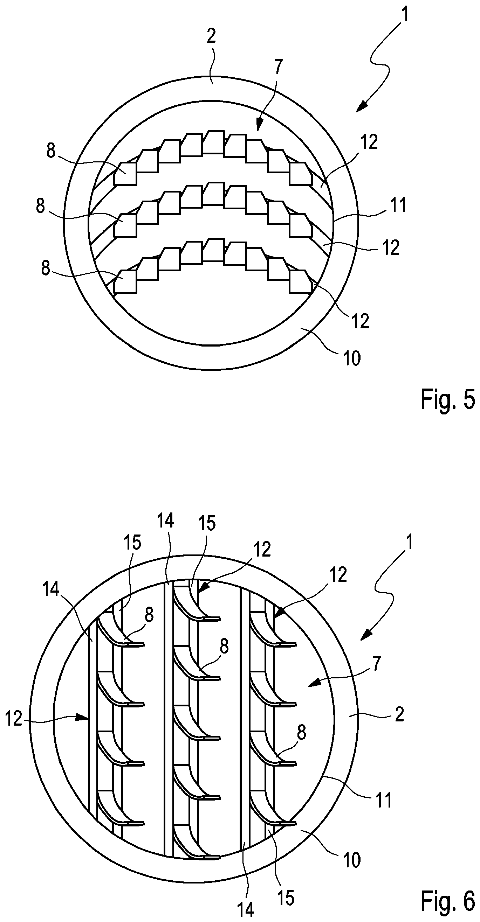

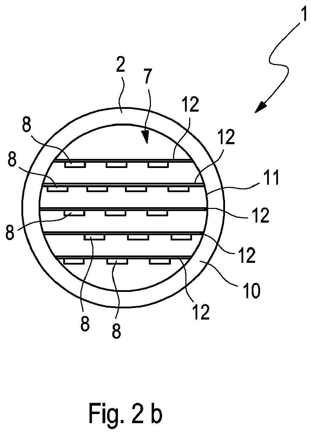

In einer in der Figur 5 gezeigten Variante können die Befestigungselemente 12 als jeweils gekrümmte Streben ausgebildet sein, welche zueinander beabstandet im Bereich der Auslass-Querschnittsfläche 11 der Abgasreinigungseinrichtung 2 angeordnet sind.

Die Darstellung der Figur 6 zeigt schließlich eine besondere Variante der Befestigungselemente 12 bzw. der daran befestigten Reduktionsmittel-Ablenkelemente 8. Die Befestigungselemente 12 sind dabei als zweiteilige Streben mit einem jeweils ersten und zweiten Strebenelement 14, 15 ausgebildet. Die beiden Strebenelemente 14, 15 sind parallel zueinander und beabstandet zueinander in einer axialen Richtung A verlaufend angeordnet. Mehrere Reduktionsmittel-Ablenkelemente 8 sind in einem Zwischenbereich zwischen dem ersten und zweiten Strebenelement 14, 15 in der Axialrichtung benachbart und zueinander beabstandet angeordnet und endseitig jeweils mit dem ersten und zweiten Strebenelement 14, 15, beispielsweise mittels Verschweißen, verbunden. Alternativ dazu können die Reduktionsmittel-Ablenkelemente 8 aber auch integral an den beiden Strebenelementen 14, 15 ausgeformt sein.

In der Darstellung der Figur 6 sind jeweils gekrümmt ausgebildete Reduktionsmittel-Ablenkelemente gezeigt. Es ist klar, dass weitere Varianten aber auch gerade ausgebildete oder abgewinkelt ausgebildete Reduktionsmittel-Ablenkelemente 8 (vgl. hierzu Fig. 2 und 4) vorstellbar sind.

## Patentansprüche

1. Abgasanlage für ein Kraftfahrzeug,
- mit einer Abgasreinigungseinrichtung (2) zur Reinigung von aus einer Brennkraftmaschine des Kraftfahrzeugs abgeführtem Abgas (3),
- mit einer stromab und beabstandet zur Abgasreinigungseinrichtung (2) angeordneten Reduktionsmittel-Zuführungseinrichtung (4), mittels welcher ein Reduktionsmittel in die Abgasanlage (1; 100) einbringbar ist,
- wobei eine Strömungsrichtung (R), mit der das Reduktionsmittel in die Abgasanlage (1; 100) eingebracht wird, wenigstens teilweise entgegengesetzt zur Strömungsrichtung (102) des Abgases in der Abgasanlage (1; 100) verläuft,
- mit einer zwischen der Abgasreinigungseinrichtung (2) und der Reduktionsmittel-Zuführungseinrichtung (4) angebrachten Reduktionsmittel-Ablenkeinrichtung (7), welche wenigstens ein schaufelartig ausgebildetes Reduktionsmittel-Ablenkelement (8) aufweist,
- wobei die Reduktionsmittel-Ablenkeinrichtung (7) an einer Auslassseite (10) der Abgasreinigungseinrichtung (2) angeordnet und befestigt ist,
- wobei die Reduktionsmittel-Ablenkeinrichtung (7) eine Mehrzahl von Reduktionsmittel-Ablenkelementen (8) umfasst, die im Bereich der Auslassseite (10) der Abgasreinigungseinrichtung (2) angeordnet sind,
- wobei die Reduktionsmittel-Ablenkelemente (8) in einer Ausbreitungsrichtung (S) des Reduktionsmittels zur Auslassseite (10) blickdicht angeordnet oder/und ausgestaltet sind,
**dadurch gekennzeichnet, dass**
- die Auslassseite (10) eine Auslass-Querschnittsfläche (11) der Abgasreinigungseinrichtung (2) definiert,
- im Bereich der Auslass-Querschnittfläche (11) wenigstens ein im Wesentlichen strebenartig ausgebildetes Befestigungselement (12) angeordnet ist, welches sich jeweils endseitig an der Auslassseite (10) der Abgasreinigungseinrichtung (2) abstützt,
- an dem wenigstens einen Befestigungselement (12) wenigstens ein Reduktionsmittel-Ablenkelement (7) angeordnet ist.

2. Abgasanlage nach Anspruch 1,
**dadurch gekennzeichnet, dass**
das Reduktionsmittel-Ablenkelement (7) derart ausgebildet ist, dass von der Reduktionsmittel-Zuführungseinrichtung (4) in die Abgasanlage (1) eingebrachtes und auf das Reduktionsmittel-Ablenkelement (8) treffendes Reduktionsmittel von der Abgasreinigungseinrichtung (2) weggerichtet abgelenkt wird.

3. Abgasanlage nach einem der Ansprüche 1 oder 2,
**dadurch gekennzeichnet, dass**
das Reduktionsmittel-Ablenkelement (7) derart ausgebildet ist, dass von der Reduktionsmittel-Zuführungseinrichtung (4) in die Abgasanlage (1) eingebrachtes und auf das Reduktionsmittel-Ablenkelement (8) treffendes Reduktionsmittel verdampft wird.

4. Abgasanlage nach einem der vorhergehenden Ansprüche,
**dadurch gekennzeichnet, dass**
das Reduktionsmittel-Ablenkelement (8) integral am Befestigungselement (12) ausgeformt ist.

5. Abgasanlage nach einem der vorhergehenden Ansprüche,
**dadurch gekennzeichnet, dass**
im Bereich der Auslass-Querschnittsfläche (11) wenigstens fünf, vorzugsweise wenigstens zehn, höchst vorzugsweise wenigstens zwanzig, zueinander beabstandet angeordnete Befestigungselemente (12) angeordnet sind.

6. Abgasanlage nach einem der vorhergehenden Ansprüche,
**dadurch gekennzeichnet, dass**
- die Befestigungselemente (12) zeilenartig in der Auslass-Querschnittsfläche (11) angeordnet sind,
- die Reduktionsmittel-Ablenkelemente (8) jeweils beabstandet zueinander auf einem Befestigungselement (12) angebracht sind, so dass durch die Reduktionsmittel-Ablenkelemente (8) ein Reduktionsmittel-Ablenkelemente-Raster ausgebildet ist.

7. Abgasanlage nach einem der vorhergehenden Ansprüche,
**dadurch gekennzeichnet, dass**
die Befestigungselemente (12) jeweils als gerade Streben ausgebildet sind, die im Wesentlichen parallel und beabstandet zueinander im Bereich der Auslass-Querschnittsfläche (11) der Abgasreinigungseinrichtung (2) angeordnet sind.

8. Abgasanlage nach einem der vorhergehenden Ansprüche,
**dadurch gekennzeichnet, dass**
die Befestigungselemente (12) jeweils als gekrümmte Streben ausgebildet sind, die beabstandet zueinander im Bereich der Auslass-Querschnittsfläche der Abgasreinigungseinrichtung (2) angeordnet sind.

9. Abgasanlage nach einem der vorhergehenden Ansprüche,
**dadurch gekennzeichnet, dass**
die Reduktionsmittel-Ablenkelemente (8) in einer Axialrichtung (A) jeweils gekrümmt oder abgewinkelt ausgebildet sind und mit einem axialen Endabschnitt (13) an einem Befestigungselement (12) befestigt sind.

10. Kraftfahrzeug,
- mit einer Abgasanlage (1; 100) nach einem der vorhergehenden Ansprüche,
- mit einer stromauf der Abgasanlage (1; 100) angeordneten und mit dieser fluidisch verbundenen Brennkraftmaschine.

## Claims

1. Exhaust gas assembly for a motor vehicle,
- having an exhaust gas purification device (2) for purifying exhaust gas (3) discharged from an internal combustion engine of the motor vehicle,
- having, arranged downstream from and distanced from the exhaust gas purification device (2), a reducing agent-supply device (4) by means of which a reducing agent can be introduced into the exhaust gas assembly (1; 100),
- wherein a flow direction (R), with which the reducing agent is introduced into the exhaust gas assembly (1; 100), extends at least partially contrary to the flow direction (102) of the exhaust gas in the exhaust gas assembly (1; 100),
- having a reducing agent-deflection device (7) mounted between the exhaust gas purification device (2) and the reducing agent-supply device (4), which reducing agent-deflection device has at least one shovel-like reducing agent-deflection element (8),
- wherein the reducing agent-deflection device (7) is arranged and fixed at an outlet side (10) of the exhaust gas purification device (2),
- wherein the reducing agent-deflection device (7) comprises a plurality of reducing agent-deflection elements (8) which are arranged in the region of the outlet side (10) of the exhaust gas purification device (2),
- wherein the reducing agent-deflection elements (8) are arranged or/and formed opaquely in a propagation direction (S) of the reducing agent to the outlet side (10),
**characterised in that**
- the outlet side (10) defines an outlet cross-sectional area (11) of the exhaust gas purification device (2),
- in the region of the outlet cross-sectional area (11) is disposed at least one substantially strut-like formed fastening element (12) which is supported respectively on the end side on the outlet side (10) of the exhaust gas purification device (2),
- on the at least one fastening element (12) is arranged at least one reducing agent-deflection element (8).

2. Exhaust gas assembly according to claim 1,
**characterised in that**
the reducing agent-deflection element (7) is designed such that reducing agent introduced by the reducing agent-supply device (4) into the exhaust gas assembly (1) and impacting on the reducing agent-deflection element (7) is deflected directed away from the exhaust gas purification device (2).

3. Exhaust gas assembly according to claim 1 or 2,
**characterised in that**
the reducing agent-deflection element (7) is designed such that reducing agent introduced by the reducing agent-supply device (4) into the exhaust gas assembly (1) and impacting on the reducing agent-deflection element (8) is vaporised.

4. Exhaust gas assembly according to any of the preceding claims,
**characterised in that**
the reducing agent-deflection element (8) is formed integrally on the fastening element (12).

5. Exhaust gas assembly according to any of the preceding claims,
**characterised in that**
in the region of the outlet cross-sectional area (11) are arranged at least five, preferably at least ten, most preferably at least twenty fixing elements (12), arranged distanced from one another.

6. Exhaust gas assembly according to any of the preceding claims,
**characterised in that**
- the fastening elements (12) are arranged in rows in the outlet cross-sectional area (11),
- the reducing agent-deflection elements (8) are mounted respectively distanced from one another on a fastening element (12) such that a reducing agent-deflection element grid is formed by the reducing agent-deflection elements (8).

7. Exhaust gas assembly according to any of the preceding claims,
**characterised in that**
the fastening elements (12) are formed respectively as straight struts, which are arranged substantially parallel and distanced from one another in the region of the outlet cross-sectional area (11) of the exhaust gas purification device (2).

8. Exhaust gas assembly according to any of the preceding claims,
**characterised in that**
the fastening elements (12) are formed respectively as bent struts, which are arranged distanced from one another in the region of the outlet cross-sectional area of the exhaust gas purification device (2).

9. Exhaust gas assembly according to any of the preceding claims,
**characterised in that**
the reducing agent-deflection elements (8) in an axial direction (A) are formed respectively bent or angled and fastened with an axial end section (13) at a fastening element (12).

10. Motor vehicle,
- having an exhaust gas assembly (1; 100) according to any of the preceding claims,
- having an internal combustion engine arranged upstream from the exhaust gas assembly (1; 100) and connected fluidly therewith.

## Revendications

1. Système d'échappement pour un véhicule automobile,
- avec un dispositif de dépollution de gaz d'échappement (2) pour la dépollution de gaz d'échappement (3) sortant d'un moteur à combustion interne du véhicule automobile,
- avec un dispositif d'amenée d'agent réducteur (4) qui est agencé en aval et à distance du dispositif de dépollution de gaz d'échappement (2) et au moyen duquel un agent réducteur peut être introduit dans le système d'échappement (1 ; 100),
- dans lequel un sens d'écoulement (R) avec lequel l'agent réducteur est introduit dans le système d'échappement (1; 100) s'étend au moins partiellement à l'opposé du sens d'écoulement (102) du gaz d'échappement dans le système d'échappement (1; 100),
- avec un dispositif déflecteur d'agent réducteur (7) qui est placé entre le dispositif de dépollution de gaz d'échappement (2) et le dispositif d'amenée d'agent réducteur (4) et qui comporte au moins un élément déflecteur d'agent réducteur (8) réalisé comme une ailette,
- dans lequel le dispositif déflecteur d'agent réducteur (7) est agencé et fixé à un côté échappement (10) du dispositif de dépollution de gaz d'échappement (2),
- dans lequel le dispositif déflecteur d'agent réducteur (7) comprend une multiplicité d'éléments déflecteurs d'agent réducteur (8) qui sont agencés dans la zone du côté échappement (10) du dispositif de dépollution de gaz d'échappement (2),
- dans lequel les éléments déflecteurs d'agent réducteur (8) sont agencés ou/et réalisés de manière opaque dans un sens de propagation (S) de l'agent réducteur vers le côté échappement (10),
**caractérisé en ce que**
- le côté échappement (10) définit une surface de section transversale d'échappement (11) du dispositif de dépollution de gaz d'échappement (2),
- dans la zone de la surface de section transversale d'échappement (11) est agencé au moins un élément de fixation (12) qui est réalisé globalement comme un montant et qui s'appuie à chaque fois côté extrémité au côté échappement (10) du dispositif de dépollution de gaz d'échappement (2),
- au niveau de l'au moins un élément de fixation (12) est agencé au moins un élément déflecteur d'agent réducteur (8).

2. Système d'échappement selon la revendication 1, **caractérisé en ce que** le dispositif déflecteur d'agent réducteur (7) est réalisé de telle sorte qu'un agent réducteur qui est introduit par le dispositif d'amenée d'agent réducteur (4) dans le système d'échappement (1) et qui arrive sur l'élément déflecteur d'agent réducteur (7) est dévié à l'opposé du dispositif de dépollution de gaz d'échappement (2).

3. Système d'échappement selon l'une quelconque des revendications 1 ou 2, **caractérisé en ce que** le dispositif déflecteur d'agent réducteur (7) est réalisé de telle sorte qu'un agent réducteur qui est introduit par le dispositif d'amenée d'agent réducteur (4) dans le système d'échappement (1) et qui arrive sur l'élément déflecteur d'agent réducteur (8) est vaporisé.

4. Système d'échappement selon l'une quelconque des revendications précédentes, **caractérisé en ce que** l'élément déflecteur d'agent réducteur (8) est formé intégralement à l'élément de fixation (12).

5. Système d'échappement selon l'une quelconque des revendications précédentes, **caractérisé en ce que**, dans la zone de la surface de section transversale d'échappement (11), au moins cinq, de préférence au moins dix, au maximum de préférence au moins vingt, éléments de fixation (12) agencés à distance les uns des autres sont prévus.

6. Système d'échappement selon l'une quelconque des revendications précédentes, **caractérisé en ce que**
- les éléments de fixation (12) sont agencés en lignes dans la surface de section transversale d'échappement (11),
- les éléments déflecteurs d'agent réducteur (8) sont montés sur un élément de fixation (12) à chaque fois à distance les uns des autres de telle sorte qu'un quadrillage d'éléments déflecteurs d'agent réducteur est formé par les éléments déflecteurs d'agent réducteur (8).

7. Système d'échappement selon l'une quelconque des revendications précédentes, **caractérisé en ce que** les éléments de fixation (12) sont réalisés à chaque fois sous forme de traverses droites qui sont agencées globalement parallèles et distantes les unes des autres dans la zone de la surface de section transversale d'échappement (11) du dispositif de dépollution de gaz d'échappement (2).

8. Système d'échappement selon l'une quelconque des revendications précédentes, **caractérisé en ce que** les éléments de fixation (12) sont réalisés à chaque fois sous forme de traverses courbes qui sont agencées distantes les unes des autres dans la zone de la surface de section transversale d'échappement du dispositif de dépollution de gaz d'échappement (2).

9. Système d'échappement selon l'une quelconque des revendications précédentes, **caractérisé en ce que** les éléments déflecteurs d'agent réducteur (8) sont réalisés à chaque fois courbés ou coudés dans une direction axiale (A) et sont fixés avec une extrémité axiale (13) à un élément de fixation (12).

10. Véhicule automobile,
- avec un système d'échappement (1; 100) selon l'une quelconque des revendications précédentes,
- avec un moteur à combustion interne agencé en amont du système d'échappement (1 ; 100) et relié à celui-ci pour ce qui est des fluides.
